# DEMANDE DE BREVET EUROPEEN

(11) **EP 1 650 058 A1**
(43) Date de publication de la demande: **26.04.2006**
(21) Numéro de dépôt: 05300742.3
(22) Date de dépôt: 12.09.2005
(51) Int. Cl.: B60C 23/04, B60C 23/02

(54) **Système de contrôle de la pression de gonflage de pneumatiques d'un véhicule automobile**

(30) Priorité: 20.10.2004 FR 0411169
(71) Demandeur: Peugeot Citroen Automobiles SA, 78140 Vélizy Villacoublay (FR)
(72) Inventeur: RIGAUD, Stéphane M., 92250, LA GARENNE-COLOMBES (FR); BRO, Stéphane M., 92130, SEVRES (FR)

(57) **Abrégé**

Ce système de contrôle de la pression de gonflage de pneumatiques d'un véhicule automobile, du type comportant des capteurs de pression, des moyens (5) de stockage de valeurs de pressions prédéterminées et des moyens (4) d'analyse et de comparaison de ces pressions mesurées aux valeurs prédéterminées, pour détecter des défauts de gonflage des pneumatiques, est caractérisé en ce que les moyens de stockage (5) comportent une première zone (6) de stockage de premières valeurs de pressions prédéterminées, correspondant à des pneumatiques de première monte sur le véhicule et au moins une seconde zone de stockage (7) de secondes valeurs de pressions prédéterminées, correspondant à des pneumatiques de nouvelle monte sur le véhicule, chargées dans celle-ci par un outil extérieur au véhicule (8), à partir d'informations portées par une vignette (1) fixée sur le véhicule.

## Description

La présente invention concerne un système de contrôle de la pression de gonflage des pneumatiques d'un véhicule automobile.

On sait que de façon générale, de tels systèmes de contrôle comportent des capteurs de pression, des moyens de stockage de valeurs de pressions de gonflage prédéterminées et des moyens d'analyse et de comparaison de ces pressions mesurées aux valeurs prédéterminées pour détecter par exemple des défauts de gonflage des pneumatiques et en particulier, un sous-gonflage de ceux-ci.

Ces systèmes de contrôle doivent être conformes à la vignette de gonflage des pneumatiques, fixée sur le véhicule et en particulier sur une portière de celui-ci.

Cela signifie que des seuils absolus d'alerte sont calculés par rapport à ces consignes de pressions de la vignette de la portière alors que des seuils relatifs sont en général fixes pour tous les véhicules.

Les valeurs de pressions sont intégrées à un calculateur du système de contrôle grâce à un fichier de calibration défini suivant la configuration du véhicule, à savoir ses attributs décrivant par exemple le type de véhicule, de moteur, de boite de vitesses, de monte pneumatique, de pressions avant et arrière, etc.

Le téléchargement de ces informations ainsi que des verrous correspondants définis par le constructeur, permet de télécharger le calculateur pour la première fois en usine suivant une configuration connue avant le démarrage série par les études et de mettre à jour ce fichier en après-vente, à la suite de la découverte d'erreurs de calibration ou de mises à jour de calibrations jugées trop sensibles, par exemple dans le cas de seuil d'alerte ou de temporisation d'alerte d'absence d'un capteur, avec un nouveau fichier qui annule et remplace le précédent sans possibilité de revenir à la première calibration.

Mais ceci présente un certain nombre d'inconvénients.

En effet, cette politique de gestion de téléchargement permet de télécharger un nouveau fichier de calibration suite à un changement de monte pneumatique, comme par exemple dans le cas de la volonté d'un client de passer à des pneumatiques dits de « surmonte » ou à une monte « hivernale » équipée de capteurs, mais sans avoir la possibilité de gérer deux montes de pneumatiques en parallèle avec des consignes de pressions différentes.

En effet, dans ce cas, le nouveau fichier téléchargé annule et remplace le précédent.

Cette politique ne permet pas non plus de gérer la diversité en terme de manufacturiers de pneumatiques en usine, sur une même dimension de pneumatiques.

En effet, de par l'exigence des tests consuméristes, les metteurs au point sont amenés de plus en plus souvent à préconiser des consignes différentes de pressions pour une même monte de pneumatiques de manufacturiers différents (double fournisseur pour un même produit).

Comme la marque du pneumatique, c'est-à-dire le manufacturier n'est pas un attribut du véhicule, il est impossible d'assurer dès le téléchargement en usine, deux calibrations distinctes par manufacturier de pneumatiques et pour un véhicule à iso-configuration. Il faut d'ailleurs noter que la direction des achats d'un constructeur, ne souhaite pas que le nom du manufacturier de pneumatiques soit un attribut, car elle affecte ces marchés au volume et souhaite donc que ce produit soit interchangeable, à l'exception de la vignette portée par le véhicule.

Enfin, cette politique de gestion du téléchargement implique également de connaître les pressions quelques mois avant le démarrage série d'un projet de véhicule. Le processus de création d'un nouveau fichier de calibration est en effet plus important que celui de création d'une nouvelle vignette et nécessite une mise à jour importante des outils de calibration en bord des lignes de montage.

Malheureusement, des évolutions tardives sur la liaison au sol en fin de projet véhicule, imposent des mises à jour fréquentes des vignettes, qui sont nécessaires pour bien se positionner en test consumériste et qui sont difficilement gérables sans risque au niveau de la qualité.

Or, on sait que dans ce cas, si la monte de pneumatiques change alors que le système de contrôle n'est pas adapté à la nouvelle monte, différents dysfonctionnements peuvent se produire, tels que par exemple des alertes intempestives ou retardées et des risques d'erreurs sur la localisation, qui est une sous-fonction du système de contrôle permettant de localiser la ou les roues présentant un défaut.

Le but de l'invention est donc de résoudre ces problèmes.

A cet effet, l'invention a pour objet un système de contrôle de la pression de gonflage de pneumatiques d'un véhicule automobile, du type comportant des capteurs de pression, des moyens de stockage de valeurs de pressions prédéterminées et des moyens d'analyse et de comparaison de ces pressions mesurées aux valeurs prédéterminées, pour détecter des défauts de gonflage des pneumatiques, caractérisé en ce que les moyens de stockage comportent une première zone de stockage de premières valeurs de pressions prédéterminées, correspondant à des pneumatiques de première monte sur le véhicule et au moins une seconde zone de stockage de secondes valeurs de pressions prédéterminées, correspondant à des pneumatiques de nouvelle monte sur le véhicule, chargées dans celle-ci par un outil extérieur au véhicule, à partir d'informations portées par une vignette fixée sur le véhicule.

Suivant d'autres caractéristiques de l'invention :
- la vignette porte un code à barre 2D représentatif des valeurs ;
- la vignette porte un code à barre 3D représentatif des valeurs ;
- l'outil extérieur est associé à des moyens de lecture du code à barre ;
- la vignette porte un code hexadécimal représentatif des valeurs ; et
- l'outil extérieur est associé à des moyens de saisie du code par un opérateur.

L'invention sera mieux comprise à la lecture de la description qui va suivre, donnée uniquement à titre d'exemple et faite en se référant aux dessins annexés, sur lesquels :
- la Fig.1 illustre une vignette utilisée en association avec un système de contrôle selon l'invention ; et
- la Fig.2 représente un schéma synoptique illustrant la structure et le fonctionnement d'un tel système.

Comme cela a été indiqué précédemment, l'invention se rapporte à un système de contrôle de la pression de gonflage des pneumatiques d'un véhicule automobile, qui comporte des capteurs de pression, des moyens de stockage de valeurs de pressions de gonflage prédéterminées et des moyens d'analyse et de comparaison de ces pressions mesurées aux valeurs prédéterminées, pour détecter des défauts de gonflage de pneumatiques.

Pour résoudre les problèmes évoqués précédemment, des modifications ou évolutions sont apportées à ce système de contrôle, à la vignette de pressions fixée sur le véhicule et en particulier sur une portière de celui-ci et aux outils de téléchargement, que ceux-ci soient des outils par exemple de diagnostic en après-vente, ou en usine.

A cet effet, et tout en préservant le fonctionnement actuel, c'est-à-dire le téléchargement en usine de fichiers de calibration pour les données fonctionnelles et pneumatiques des premières montes de pneumatiques, on ajoute dans le calculateur une case mémoire dans laquelle on peut enregistrer des informations relatives à une nouvelle monte de pneumatiques.

Ainsi par exemple, il est possible d'enregistrer dans cette nouvelle case, la taille de la nouvelle monte, c'est-à-dire ses caractéristiques de largeur/hauteur/diamètre, comme par exemple 195/45/18, la pression avant recommandée à vide et la pression arrière recommandée à vide.

Lors du renseignement de cette case, le système de contrôle doit alors prendre en compte ces nouvelles valeurs, recalculer les seuils d'alerte en fonction de la température de compensation mentionnée dans le fichier de calibration et recalculer les données impactant la localisation.

La requête d'écriture de ces nouvelles informations contient un paramètre permettant de sélectionner la zone voulue, c'est-à-dire le fichier de calibration d'origine ou accessoire. De ce fait, par simple requête en après-vente, il est possible de revenir à une monte d'origine par permutation monte d'origine et accessoire et inversement.

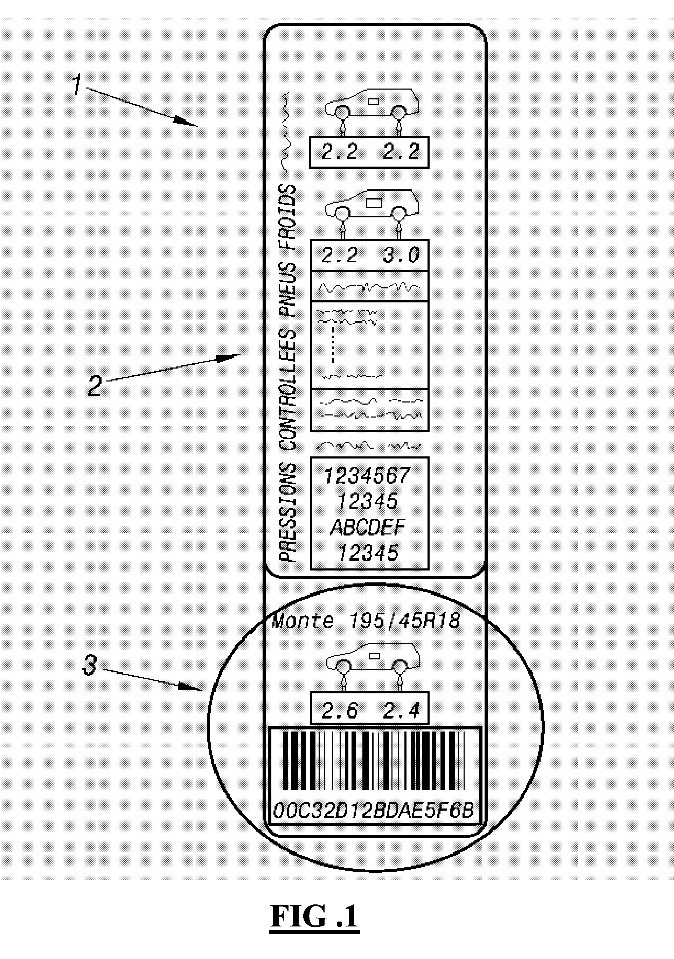

Ceci est illustré en particulier sur la figure 1, qui représente une vignette fixée par exemple sur le véhicule et plus particulièrement sur une portière de celui-ci.

Cette vignette est désignée par la référence générale 1 sur cette figure, et présente donc deux portions, à savoir une portion supérieure désignée par la référence générale 2 et une portion inférieure désignée par la référence générale 3.

La portion supérieure 2 présente une structure classique connue aujourd'hui et est donc la portion attribuée à la monte d'origine de pneumatiques en sortie usine du véhicule.

Cette portion présente alors la monte d'origine, la pression recommandée à vide à l'avant et à l'arrière, la pression recommandée en charge à l'avant et à l'arrière et parfois sur les véhicules de haut de gamme, la pression recommandée en charge et à haute vitesse à l'avant et à l'arrière.

La portion inférieure 3 est ajoutée à cette vignette et est attribuée à la nouvelle monte de pneumatiques.

Cette nouvelle portion comporte alors un certain nombre d'informations relatives à la nouvelle monte de pneumatiques et en particulier les pressions recommandées à vide pour l'essieu avant et l'essieu arrière.

En fait, ces différentes informations peuvent se présenter sur la vignette, par exemple sous la forme d'un code à barre 2D ou 3D, qui sera utilisé pour renseigner le système de contrôle.

Les informations portées par cette portion de vignette peuvent alors se présenter sous la forme suivante :

### Format code :

| 195 | 45 | 18 | 2,6 | 2,4 | xxxx |
|---|---|---|---|---|---|
| Largeur (16bits) | Hauteur (8bits) | φ (8bits) | PAV (8bits) | PAR (8bits) | CRC (16bits) |

### Exemple (traduction du format ci-dessus) :

00C32D12BDAE5F6B

Cette vignette est alors livrée avec la nouvelle monte de pneumatiques sous une forme globale ensemble roues montées plus vignette associée.

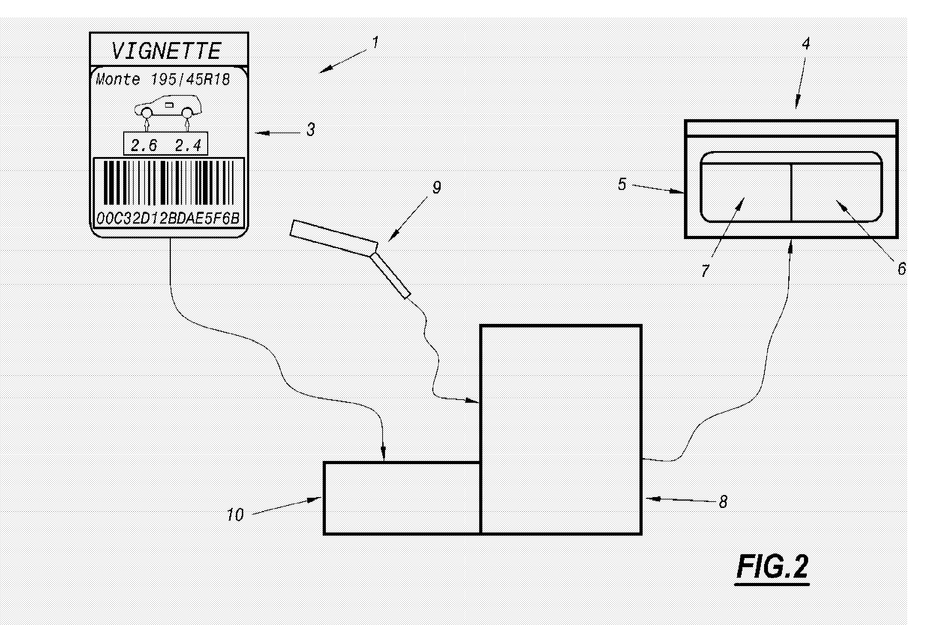

Le chargement de ces informations dans le système de contrôle est illustré sur la figure 2.

On a en effet illustré sur cette figure, un système de contrôle de la pression de gonflage désigné par la référence générale 4 et en particulier le calculateur de détection de sous-gonflage des pneumatiques du véhicule.

Comme cela est indiqué précédemment, ce calculateur comporte des moyens de stockage des valeurs de pressions de gonflage prédéterminées, ces moyens de stockage étant désignés par la référence générale 5.

Selon l'invention, ces moyens 5 comprennent une première zone de stockage de premières valeurs prédéterminées, correspondant à des pneumatiques de première monte sur le véhicule, cette première zone étant désignée par la référence générale 6.

De plus, ces moyens de stockage comprennent au moins une seconde zone de stockage de secondes valeurs prédéterminées, correspondant à des pneumatiques de nouvelle monte sur le véhicule, cette seconde zone de stockage étant désignée par la référence générale 7.

En fait, ces secondes valeurs prédéterminées peuvent être chargées dans cette seconde zone, par un outil extérieur au véhicule, tel que par exemple un outil de diagnostic usine ou en après-vente, désigné par la référence générale 8.

Cet outil est alors associé à des moyens d'acquisition de ces informations portées par la vignette fixée sur le véhicule, telle que la vignette 1 et en particulier la portion inférieure 3 de celle-ci.

En effet, l'outil de diagnostic usine ou après-vente peut être associé par exemple à des moyens de lecture du code à barre 2D et 3D porté par cette portion de la vignette, désignés par la référence générale 9 sur cette figure, ou encore à des moyens de saisie de ce code par un opérateur, ces moyens étant désignés par la référence générale 10 et comportant par exemple un clavier permettant alors par exemple à un opérateur de service après-vente, de saisir un code hexadécimal correspondant porté par cette portion de vignette.

Ainsi, les services après-vente peuvent à l'aide du dispositif de lecture 9 ou par saisie du code à travers par exemple le clavier 10, mettre à jour le calculateur du système de contrôle de pression à chaque changement de monte de pneumatiques.

Dès lors, des informations relatives à au moins deux montes de pneumatiques, cohabitent sur une vignette fixée sur la portière du véhicule par exemple.

Une telle vignette peut également être adaptée pour tous les cas de montes identiques sur une même configuration de véhicule, mais avec des fournisseurs de pneumatiques différents nécessitant des pressions différentes.

Il suffit alors simplement de modifier les vignettes existantes en y ajoutant la portion inférieure intégrant les informations relatives à la nouvelle monte de pneumatiques.

En service après-vente, ceci se traduit par la livraison d'une vignette spécifique avec l'ensemble de pneumatiques montés lors d'un changement de monte, et en usine, par une vignette présentant deux séries d'informations permettant l'acceptation de deux fournisseurs de pneumatiques avec des pressions recommandées différentes sur une même dimension de pneumatiques et déclinaison de véhicule, en sachant que le pneumatique n'est pas un attribut dans la composition du véhicule.

On conçoit alors qu'un tel système présente un certain nombre d'avantages notamment au niveau des changements de monte, car elle permet un changement de monte sur volonté d'un client, tout en adaptant très facilement le fonctionnement du système de contrôle intégré dans le véhicule.

De plus, un tel système permet également d'utiliser deux fournisseurs de pneumatiques avec des pressions différentes sur une même dimension de pneumatiques, sachant que le pneumatique n'est pas un attribut dans la composition du véhicule, ce qui permet d'améliorer la souplesse de l'approvisionnement de ce type de pièces.

De plus, un tel système permet de réduire les risques d'erreurs entre les pressions téléchargées dans les calculateurs et celles inscrites sur les vignettes portées par les véhicules.

## Revendications

1. Système de contrôle de la pression de gonflage de pneumatiques d'un véhicule automobile, du type comportant des capteurs de pression, des moyens (5) de stockage de valeurs de pressions prédéterminées et des moyens (4) d'analyse et de comparaison de ces pressions mesurées aux valeurs prédéterminées, pour détecter des défauts de gonflage des pneumatiques, **caractérisé en ce que** les moyens de stockage (5) comportent une première zone (6) de stockage de premières valeurs de pressions prédéterminées, correspondant à des pneumatiques de première monte sur le véhicule et au moins une seconde zone de stockage (7) de secondes valeurs de pressions prédéterminées, correspondant à des pneumatiques de nouvelle monte sur le véhicule, chargées dans celle-ci par un outil extérieur au véhicule (8), à partir d'informations portées par une vignette (1) fixée sur le véhicule.

2. Système selon la revendication 1, **caractérisé en ce que** la vignette (1) porte un code à barre 2D représentatif des valeurs.

3. Système selon la revendication 1, **caractérisé en ce que** la vignette (1) porte un code à barre 3D représentatif des valeurs.

4. Système selon la revendication 1 ou 2, **caractérisé en ce que** l'outil extérieur (8) est associé à des moyens (9) de lecture du code à barre.

5. Système selon l'une quelconque des revendications précédentes, **caractérisé en ce que** la vignette (1) porte un code hexadécimal représentatif des valeurs.

6. Système selon la revendication 5, **caractérisé en ce que** l'outil extérieur (8) est associé à des moyens (10) de saisie du code par un opérateur.
